# EUROPEAN PATENT APPLICATION

(11) **EP 4 477 715 A1**
(43) Date of publication of application: **18.12.2024**
(21) Application number: 23752880.7
(22) Date of filing: 08.02.2023
(51) Int. Cl.: C08L 101/14, C08B 5/14, C08J 5/18, C08L 1/16, D06M 15/03, D06M 15/333

(54) **SOLID WATER-DEGRADABLE COMPLEX AND METHOD FOR MANUFACTURING SAME**

(30) Priority: 08.02.2022 JP 2022017930
(71) Applicant: Yokogawa Electric Corporation, Tokyo 180-8750 (JP)
(72) Inventor: IWAMOTO Shinichiro, Musashino-shi, Tokyo, 180-8750 (JP); MOCHIDUKI Makoto, Musashino-shi, Tokyo, 180-8750 (JP); SAKO Takahiro, Musashino-shi, Tokyo, 180-8750 (JP); SUZUKI Takeshi, Musashino-shi, Tokyo, 180-8750 (JP); TANI Ryotaro, Musashino-shi, Tokyo, 180-8750 (JP); TANAKA Hiroaki, Musashino-shi, Tokyo, 180-8750 (JP)
(74) Representative: Grünecker Patent- und Rechtsanwälte PartG mbB
(86) International application number: PCT/JP2023/004098
(87) International publication number: WO 2023/153416

(57) **Abstract**

One or more aspects of the present invention have an object to provide a novel solid water-disintegrable composite easily disintegrable in room temperature water while containing a polymer compound, such as a polyvinyl alcohol, poorly soluble or insoluble in room temperature water and soluble in hot water. One or more aspects of the present invention relate to a solid water-disintegrable composite containing a polymer compound poorly soluble or insoluble in water at 25°C and soluble in water at 80°C or higher and a cellulose nanofiber with a sulfate ester group. Another one or more aspects of the present invention relate to a method for producing the composite, and the method includes a step of preparing a dispersion liquid containing a solvent, and the polymer compound and the cellulose nanofiber dispersed in the solvent, and a step of removing the solvent from the dispersion liquid to obtain the composite.

## Description

### Technical Field

One or more aspects of the present invention relate to a solid water-disintegrable composite and a method for producing the same.

### Background Art

A water-disintegrable material means a material having a property that is solid (for example, allowed to be in a shape of powder, fiber, or film) and easy in handling when there is no water, and that disperses in water with its form disintegrated when immersed in water.

Examples of the water-disintegrable material include a water-soluble sheet-shaped color material, disclosed in Patent Literature 1, containing a film-forming water-soluble polymer, a solubility promoter, a colorant, and a moisture retaining agent. According to Patent Literature 1, the water-soluble sheet-shaped color material has low adherence, appropriate self-standing property and flexibility, and satisfactory handleability, and promptly becomes uniform when dissolved in water. In Patent Literature 1, examples of the film-forming water-soluble polymer include polyvinyl alcohol, polyvinylpyrrolidone, water-soluble acrylic polymer, gelatin, starch, casein, polymer polysaccharide, and the like.

Patent Literature 1 discloses that when polyvinyl alcohol is used as the film-forming water-soluble polymer, a polymerization degree is preferably from 1,500 to 5,000, and more preferably from 2,000 to 4,500. Patent Literature 1 further discloses that it is preferable to use a combination of polyvinyl alcohol having the polymerization degree of from 1,500 to 5,000 and cellulose nanofiber as the film-forming water-soluble polymer.

Patent Literature 1 further discloses that the solubility promoter is a component that has a relatively high water solubility and assists dissolution of the film-forming water-soluble polymer having a low water solubility compared with the solubility promoter, and then has an action to promote dissolution of the sheet-shaped color material brough in contact with water, and also has an action of uniformly dispersing the colorant when the sheet-shaped color material is dissolved in water. As a specific example, polyvinyl alcohol having the polymerization degree of preferably from 200 to 1,400, more preferably from 300 to 1,000, and/or fatty acid metal salt is described.

On the other hand, due to the increased environmental awareness, studies aimed at the practical application of biomass-derived materials are being conducted around the world. For example, a large part of cellulose extracted from woody materials (wood chips) is used as paper, and significantly contributes to both of people's life and CO₂ fixation. Among cellulose, especially cellulose nanofiber is used or desired to be used in many fields. The cellulose nanofiber is a compound derived from biomass obtained by fibrillating cellulose fibers to a nano-size, and a well-dispersing property in water of the cellulose nanofiber easily provides a transparent nanocellulose film by drying a dispersion liquid thereof. Mixing with a resin or a rubber leads to the improvement of various physical properties, such as the improvement of a strength, a flexibility, and/or an elongation ratio, and therefore, the cellulose nanofiber is attracting the attention as an environmentally compatible novel material, and various proposals have been conventionally made.

For example, Patent Literature 2 discloses a method for producing a fine cellulose fiber in which a part of hydroxyl groups of cellulose is oxidized to at least one functional group selected from the group consisting of carboxyl group and aldehyde group using an N-oxyl compound, such as 2,2,6,6-tetramethylpiperidine-N-oxyl (TEMPO), as an oxidation catalyst.

Patent Literature 3 discloses, as means to solve a problem of efficiently obtaining a nanofiber of biomass, such as cellulose, chitin, and chitosan, to effectively use the biomass, a method for producing a bio-nanofiber in which a dispersion fluid of biomass is injected at a high pressure of 100 to 245 MPa to be collided against a hard body for collision.

Patent Literature 4 discloses a method for producing a cellulose nanofiber in which hydroxyl groups are sulfate ester modified.

### Citation List

### Patent Literature

Patent Literature 1: JP 2019-206646 A
Patent Literature 2: JP 2008-1728 A
Patent Literature 3: JP 2011-56456 A
Patent Literature 4: WO 2018/131721

### Summary of Invention

### Technical Problem

Among polyvinyl alcohols (PVAs), a high molecular weight PVA is excellent in mechanical strength and formability in the solid state while being poorly soluble in room temperature water and soluble in hot water. Therefore, Patent Literature 1 discloses a combination with the solubility promoter, such as a low molecular weight PVA and a fatty acid metal salt, when the high molecular weight PVA is used as a water-disintegrable material in room temperature water. However, the present inventors found that a film made of the high molecular weight PVA mixed with the low molecular weight PVA is poor in mechanical property compared with a film made of only the high molecular weight PVA.

Therefore, it is an object to be achieved of one or more aspects of the present invention to provide a novel solid water-disintegrable composite easily disintegrable in room temperature water while containing a polymer compound, such as a PVA, poorly soluble or insoluble in room temperature water and soluble in hot water.

### Solution to Problem

The present inventors found that a material in which a water-soluble polymer, such as carboxymethyl cellulose and xanthan gum, is mixed instead of the low molecular weight PVA described in Patent Literature 1 to improve the water disintegrability at room temperature of the high molecular weight PVA is also reduced in a mechanical property compared with a material made of only the high molecular weight PVA.

Further, the present inventors found that a material in which the high molecular weight PVA and the TEMPO-oxidized cellulose nanofiber described in Patent Literature 2 or the mechanically refined cellulose nanofiber described in Patent Literature 3 are complexed is excellent in mechanical strength but low in water disintegrability in room temperature water compared with the material made of only the high molecular weight PVA.

Therefore, the present inventors seriously studied, and found that a solid composite in which a cellulose nanofiber with a sulfate ester group(s) is combined with a polymer compound poorly soluble or insoluble in room temperature water and soluble in hot water is more excellent in a mechanical property and higher in water disintegrability in room temperature water than a material made of only the polymer compound, thus completing one or more aspects of the present invention below.

(1) A solid water-disintegrable composite comprising: a polymer compound poorly soluble or insoluble in water at 25°C and soluble in water at 80°C or higher; and a cellulose nanofiber with a sulfate ester group.
(2) The composite according to claim (1), in which the polymer compound is one or more selected from the group consisting of polyvinyl alcohol, starch, gelatin, carrageenan, agar, and a derivative thereof.
(3) The composite according to (2), in which the polymer compound is a polyvinyl alcohol having a weight average molecular weight of 60,000 g/mol or more and 220,000 g/mol or less.
(4) The composite according to any of (1) to (3), in which the cellulose nanofiber is contained by 2 mass% or more and 98 mass% or less relative to a total amount of the polymer compound and the cellulose nanofiber.
(5) The composite according to any of (1) to (4), in which the composite has a shape of a film or a fiber.
(6) The composite according to any of (1) to (5), in which a shape is disintegrated in water at 25°C within 24 hours.
(7) The composite according to any of (1) to (6), in which an aqueous dispersion liquid prepared by dispersing the composite in water so as to have a concentration of the cellulose nanofiber of 0.3 mass% does not have stringiness at 25°C.
(8) The composite according to any of (1) to (7), in which an aqueous dispersion liquid prepared by dispersing the composite in water so as to have a concentration of the cellulose nanofiber of 0.3 mass% has a viscosity of 500 mPa•S or more when the viscosity is measured at 25°C under a condition of a rotor rotation speed of 2.6 rpm using a B-type viscometer.
(9) The composite according to any of (1) to (8), in which an aqueous dispersion liquid prepared by dispersing the composite in water so as to have a concentration of the cellulose nanofiber of 0.3 mass% has a thixotropic index (TI) value of from 3 to 30 when the thixotropic index (TI) value is obtained from a viscosity measured at 25°C under a condition of a rotor rotation speed of 2.6 rpm using a B-type viscometer and a viscosity measured at 25°C under a condition of the rotor rotation speed of 26 rpm using the B-type viscometer of the aqueous dispersion liquid.
(10) A method for producing the composite according to any one of (1) to (9), comprising: a step of preparing a dispersion liquid containing a solvent, and the polymer compound and the cellulose nanofiber dispersed in the solvent; and a step of removing the solvent from the dispersion liquid to obtain the composite.
(11) The method according to (10), in which the step of removing the solvent from the dispersion liquid to obtain the composite includes a step of removing the solvent from a layer of the dispersion liquid to obtain the composite in a shape of a film.
(12) The method according to (10), in which the step of removing the solvent from the dispersion liquid to obtain the composite includes: a step of mixing the dispersion liquid and a coagulation liquid to produce a mixed liquid and forming a coagulum containing the polymer compound and the cellulose nanofiber in the mixed liquid; and a step of removing the solvent from a layer of the coagulum to obtain the composite in a shape of a film.
(13) The method according to (10), in which the step of removing the solvent from the dispersion liquid to obtain the composite includes: a step of discharging the dispersion liquid from a nozzle to form a fibrous discharged object; and a step of removing the solvent from the discharged object to obtain the composite in a shape of a fiber.

The present application description encompasses the contents disclosed in Japanese Patent Application No. 2022-017930 to which the present application claims priority.

### Advantageous Effects of Invention

One or more aspects of the present invention provides the novel solid water-disintegrable composite easily disintegrated in room temperature water while containing the polymer compound, such as a PVA, poorly soluble or insoluble in room temperature water and soluble in hot water.

### Description of Embodiments

### 1. Polymer Compound

The following describes a polymer compound poorly soluble or insoluble in water at 25°C and soluble in water at 80°C or higher used in one or more aspects of the present invention.

The term "poorly soluble or insoluble in water at 25°C" specifically means that the solubility in water at 25°C is 0 g/100g or more and 1 g/100g or less, and preferably 0 g/100g or more and 0.1 g/100g or less.

The term "soluble in water at 80°C or higher" specifically means that the solubility in water at temperature of 80°C or higher is 10 g/100g or more, preferably 30 g/100g or more. A polymer compound having the solubility in the above-described range when sufficiently stirred in water at temperature of 80°C or higher for 30 minutes or more can be said to be "soluble in water at 80°C or higher."

The polymer compound with a dissolution property of being poorly soluble or insoluble in water at room temperature (it means 20°C to 30°C, the same applies to the following) and soluble in hot water (it means water at 80°C or higher, the same applies to the following) alone is not appropriate for the use as a water-disintegrable material in room temperature water. However, the present inventors unexpectedly found that a solid composite comprising the polymer compound and a cellulose nanofiber with a sulfate ester group described later can be used as a water-disintegrable material easily disintegrable in room temperature water.

The polymer compound with the above-described dissolution property is preferably one or more selected from the group consisting of polyvinyl alcohol, starch, gelatin, carrageenan, agar, and a derivative thereof, and especially preferably polyvinyl alcohol (PVA). As the PVA with the above-described dissolution property, a high molecular weight PVA is preferable.

As the high molecular weight PVA, a PVA having a weight average molecular weight of preferably 60,000 g/mol or more and 220,000 g/mol or less, more preferably 64,000 g/mol or more, and more preferably 200,000 g/mol or less, more preferably 150,000 g/mol or less, and more preferably 100,000 g/mol or less is usable. Such a high molecular weight PVA is preferable because of an excellent formability in the solid state and the high mechanical properties, such as an elastic modulus and a strength.

The weight average molecular weight of PVA can be measured by a gel permeation chromatography (GPC) method using PVA or polystyrene as a standard substance.

### 2. Cellulose Nanofiber With Sulfate Ester Group

Subsequently, a cellulose nanofiber with a sulfate ester group used in one or more aspects of the present invention will be described. The cellulose nanofiber is also referred to as a "sulfuric acid-esterified cellulose nanofiber" or a "sulfuric acid-esterified CNF."

While general cellulose (unmodified cellulose) is a polysaccharide in which glucose is linked by β-1,4-glycosidic bond, and represented by (C₆H₁₀O₅)ₙ, the cellulose nanofiber used in this aspect is a fiber composed of modified cellulose with a sulfate ester group.

A solid composite according to this aspect containing the sulfuric acid-esterified CNF and the polymer compound has a higher water disintegrability than a solid composite in which a cellulose nanofiber without a sulfate ester group is combined with the polymer compound instead of the sulfuric acid-esterified CNF with a sulfate ester group.

The solid composite according to this aspect containing the sulfuric acid-esterified CNF and the polymer compound has a high mechanical property compared with a material made of only the polymer compound or a solid composite in which a water-soluble polymer, such as carboxymethyl cellulose and xanthan gum, is combined instead of the sulfuric acid-esterified CNF.

An average fiber width of the sulfuric acid-esterified CNF is, although not particularly limited, for example, from 1 nm to 1000 nm, preferably from 1 nm to 100 nm, and more preferably from 2 nm to 10 nm. An average fiber length of the sulfuric acid-esterified CNF is, although not particularly limited, usually from 0.1 µm to 6 µm, and preferably from 0.1 µm to 2 µm.

The average fiber width and the average fiber length of the sulfuric acid-esterified CNF can be measured by, for example, measuring fiber widths (fiber diameters (equivalent circle diameters)) and fiber lengths of arbitrarily chosen 50 fibers using an atomic force microscope (SPM-9700HT, manufactured by Shimadzu Corporation) and obtaining respective arithmetic mean values thereof. The average fiber width and the average fiber length can be set to desired ranges by adjusting concentrations of reagents, such as sulfuric acid, an amount of pulp relative to a reaction solution, and a reaction time at the production of the sulfuric acid-esterified CNF.

The sulfuric acid-esterified CNF has a sulfate ester group expressed by a general formula (1) below. In the sulfuric acid-esterified CNF, the sulfate ester group is introduced by replacing a part of OH groups in cellulose usually constituting a fiber with a sulfate ester group(s) expressed by the general formula (1). The sulfuric acid-esterified CNF can be produced by, for example, sulfuric acid esterification and fibrillation of a raw material pulp as described in examples. 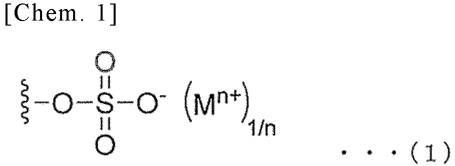 (In general formula (1), ***n*** is an integer of 1 to 3, Mⁿ⁺ is an n-valent cation, and a wavy line is a binding site to another atom.)

Examples of Mⁿ⁺ include a hydrogen ion (H⁺), a metal ion, an ammonium ion, and the like. When n is 2 or 3, Mⁿ⁺ forms ionic bonds with two or three -OSO₃⁻.

Examples of the metal ion include an alkali metal ion, an alkaline earth metal ion, a transition metal ion, and another metal ion.

Here, examples of the alkali metal ion include a lithium ion (Li⁺), a sodium ion (Na⁺), a potassium ion (K⁺), a rubidium ion (Rb⁺), a cesium ion (Cs⁺), and the like. Examples of the alkaline earth metal ion include a calcium ion (Ca²⁺), a strontium ion (Sr²⁺), and the like. Examples of the transition metal ion include an iron ion, a nickel ion, a palladium ion, a copper ion, a silver ion, and the like. Examples of the other metal ion include a beryllium ion, a magnesium ion, a zinc ion, an aluminum ion, and the like.

Examples of the ammonium ion include not only NH₄⁺ but also an ammonium ion derived from various kinds of amine in which one or more hydrogen atoms of NH₄⁺ are replaced with an organic group. Examples of the ammonium ion include NH₄⁺, a quaternary ammonium cation, an alkanolamine ion, a pyridinium ion, and the like.

As Mⁿ⁺, a hydrogen ion, a sodium ion, a potassium ion, a calcium ion, or a quaternary ammonium cation is preferable, and a sodium ion (Na⁺) is especially preferable. Mⁿ⁺ included in the sulfate ester group expressed by the general formula (1) may be only one kind, and may be two or more kinds.

When the sulfate ester group is introduced in the sulfuric acid-esterified CNF by replacing a part of OH groups in cellulose constituting a fiber with the sulfate ester group(s) expressed by the general formula (1), the wavy line is a binding site to a carbon atom to which an OH group was bound.

The sulfuric acid-esterified CNF may have another substituent in addition to the sulfate ester group expressed by the general formula (1). Here, when the sulfuric acid-esterified CNF has a group other than the sulfate ester group expressed by the general formula (1), that is, the other substituent, the other substituent is replaced with at least one of OH groups in cellulose usually constituting a cellulose nanofiber. While the other substituent is not specifically limited, examples of the other substituent include an anionic substituent and a salt thereof, an ester group, an ether group, an acyl group, an aldehyde group, an alkyl group, an alkylene group, an aryl group, and a combination of two or more kinds thereof. When the other substituent is a combination of two or more kinds, content ratios of the respective substituents are not limited. As the other substituent, especially, from the point of nano-dispersibility, the anionic substituent and the salt thereof or the acyl group is preferable among them. As the anionic substituent and the salt thereof, especially, a carboxy group, a phosphate ester group, a phosphite ester group, and a xanthate group are preferable. When the anionic substituent has a form of salt, from the point of nano-dispersibility, a sodium salt, a potassium salt, and a calcium salt are especially preferable. As the especially preferable acyl group, from the point of nano-dispersibility, an acetyl group is preferable.

The sulfuric acid-esterified CNF can have a sulfur introduction amount due to the sulfate ester group of, for example, 0.3 mmol/g or more and 3.0 mmol/g or less. The introduction amount of sulfate ester group can be set to any appropriate value within the range depending on the usage and the like. The sulfur introduction amount due to the sulfate ester group of the sulfuric acid-esterified CNF can be expressed by a sulfur content ratio (mmol) per gram of the cellulose nanofiber. The sulfur introduction amount is preferably 0.4 mmol/g or more and 2.5 mmol/g or less, and more preferably 0.8 mmol/g or more and 2.0 mmol/g or less. The sulfur introduction amount in the above-described range is preferable from the point of the high water dispersibility after drying.

The sulfur introduction amount can be obtained with, for example, Combustion and absorption-Ion Chromatography (IC) method (combustion and absorption-IC method, combustion IC method) described in examples. The sulfur introduction amount can be adjusted by, for example, controlling concentrations of reagents, such as sulfuric acid, in a solution used in fibrillation of the pulp (fibrillation solution), an amount of the pulp relative to the fibrillation solution, a reaction time, a reaction temperature, and the like.

### 3. Water-Disintegrable Composite

One or more aspects of the present invention relate to a solid water-disintegrable composite containing a polymer compound poorly soluble or insoluble in water at 25°C and soluble in water at 80°C or higher and a cellulose nanofiber with a sulfate ester group.

The water-disintegrable composite according to this aspect can be used as an easily disassembled or biodegradable formed body (packaging and the like), an easily disassembled adhesive, coating agent, coating material, cosmetic product, and the like, because of the water disintegrability thereof.

In the water-disintegrable composite according to this aspect, a combination ratio between the polymer compound and the sulfuric acid-esterified CNF is not specifically limited. The higher the ratio of sulfuric acid-esterified CNF to the polymer compound is, the more the water disintegrability of the composite tends to increase, and the lower the ratio of sulfuric acid-esterified CNF is, the more the strength and the elastic modulus of the composite tend to increase. Therefore, the combination ratio can be appropriately adjusted depending on the desired mechanical property and water disintegrability. In the water-disintegrable composite according to this aspect, a content of the sulfuric acid-esterified CNF relative to a total amount of the polymer compound and the sulfuric acid-esterified CNF can be, for example, 2 mass% or more and 98 mass% or less, preferably 5 mass% or more and 95 mass% or less, more preferably 8 mass% or more and 92 mass% or less, and especially preferably 10 mass% or more and 90 mass% or less.

The water-disintegrable composite according to this aspect can contain, in addition to the polymer compound and the sulfuric acid-esterified CNF, one or more other components depending on the usage. The other components can be water, an inorganic component, and/or an organic component.

Examples of the inorganic component include an inorganic particulate. Examples of the inorganic particulate includes silica, mica, talc, clay, carbon, a carbonate (for example, calcium carbonate, magnesium carbonate), an oxide (for example, aluminum oxide, titanium oxide, zinc oxide, iron oxide), a ceramic (for example, ferrite), or a particulate of a mixture thereof.

Examples of the organic component include at least one material selected from the group consisting of resins and rubbers. Examples of the resins and the rubbers include a phenol resin, a melamine resin, a urea resin, an alkyd resin, an epoxy resin, an unsaturated polyester resin, a polyurethane resin, a polyethylene resin (for example, high-density polyethylene, medium-density polyethylene, low-density polyethylene), a polypropylene resin, a polystyrene resin, an acrylic resin, a polyvinyl alcohol, an acrylamide resin, a silicone resin, a natural rubber, and a synthetic rubber. The organic compound may be a functional compound. Examples of the functional compound include a dye, a UV absorber, an oxidation inhibitor, an antistatic agent, and a surfactant.

The water-disintegrable composite according to this aspect can contain the polymer compound and the sulfuric acid-esterified CNF in an amount of 60 mass% or more, preferably 80 mass% or more, more preferably 90 mass% or more, more preferably 95 mass% or more, and more preferably 98 mass% or more in total, and can contain the one or more other components as described above in at least a part of the balance. The water-disintegrable composite according to this aspect may contain the polymer compound and the sulfuric acid-esterified CNF in an amount of 100 mass% in total.

While a shape of the water-disintegrable composite according to this aspect is not specifically limited insofar as the water-disintegrable composite is a solid, the water-disintegrable composite can have a shape of a film, a fiber, a powder, a granule, or the like, and especially preferably a shape of a film or a fiber. A thickness of the film, a planar dimension and a planar shape of the film, or a thickness and a length of the fiber are not especially limited, and can be appropriately set depending on the purpose. The water-disintegrable composite according to this aspect having a shape of the film or fiber may be further formed to have a desired three-dimensional shape.

The water-disintegrable composite according to this aspect preferably has the shape that is disintegrated in water at 25°C within 24 hours. Here, while an amount of the water at 25°C only needs to be an excessive amount relative to the water-disintegrable composite according to this aspect, and is not specifically limited, for example, the water can be used in an amount that provides a concentration of the sulfuric acid-esterified CNF of 0.3 mass% or less in the water-disintegrable composite according to this aspect. The term "shape (that) is disintegrated in water at 25°C within 24 hours" means that when a sample of the water-disintegrable composite according to this aspect is immersed and left to stand in water at 25°C, a standing time required until the sample becomes a state in which a part of the sample separates and becomes impossible to be grasped with tweezers is within 24 hours.

In a more preferable embodiment of the water-disintegrable composite according to this aspect, an aqueous dispersion liquid prepared by dispersing the composite in water so as to have a concentration of the cellulose nanofiber of 0.3 mass% does not have stringiness at 25°C. The water-disintegrable composite according to the embodiment is excellent in handleability in that, for example, when the water-disintegrable composite is touched with a hand, the hand is not sticky, or a dispersion liquid obtained by disintegrating the water-disintegrable composite in water is less likely to attach to a container. The present inventors found that while aqueous dispersion liquids of water-disintegrable composites prepared by combining, instead of the sulfuric acid-esterified CNF, water-soluble polymers, such as a low molecular weight PVA, carboxymethyl cellulose, and xanthan gum, into the polymer compound have the stringiness at 25°C and the poor handleability, the aqueous dispersion liquid of the water-disintegrable composite prepared by combining the sulfuric acid-esterified CNF into the polymer compound can be one without the stringiness at 25°C. The stringiness can be evaluated with a method described in examples.

In a more preferable embodiment of the water-disintegrable composite according to this aspect, the aqueous dispersion liquid prepared by dispersing the composite in water so as to have a concentration of the sulfuric acid-esterified CNF of 0.3 mass% has a viscosity of 500 mPa•S or more, more preferably 2000 mPa•S or more, more preferably 4000 mPa•S or more, and further preferably 5000 mPa•S or more, and more preferably 10000 mPa•S or less, more preferably 8000 mPa•S or less, and further preferably 7000 mPa•S or less, when the viscosity is measured at 25°C under a condition of 2.6 rpm of a rotor rotation speed using a B-type viscometer. These viscosities are provided by the viscous property due to the sulfuric acid-esterified CNF, and it is not necessary to additionally add a thickener to the water-disintegrable composite according to the embodiment.

In a more preferable embodiment of the water-disintegrable composite according to this aspect, the aqueous dispersion liquid prepared by dispersing the composite in water so as to have the concentration of the sulfuric acid-esterified CNF of 0.3 mass% has a thixotropic index (TI) value of preferably from 3 to 30, more preferably from 4 to 20, and more preferably from 5 to 15, when the thixotropic index (TI) value is obtained from the viscosity measured at 25°C under the condition of 2.6 rpm of the rotor rotation speed using the B-type viscometer and a viscosity measured at 25°C under a condition of 26 rpm of the rotor rotation speed using the B-type viscometer. The thixotropic property as described above is provided by the sulfuric acid-esterified CNF, and it is not necessary to additionally add a thixotropic agent to the water-disintegrable composite according to the embodiment. The TI value can be calculated from a formula below. TI value = (viscosity measured with 2.6 rpm)/(viscosity measured with 26 rpm)

### 4. Method for Producing Water-Disintegrable Composite

Another one or more aspects of the present invention relate to a method for producing the water-disintegrable composite according to the above-described one or more aspects, and the method includes a step of preparing a dispersion liquid containing a solvent, and the polymer compound and the cellulose nanofiber dispersed in the solvent, and a step of removing the solvent from the dispersion liquid to obtain the composite.

With the method according to this aspect, the water-disintegrable composite according to the one or more aspects can be produced.

The dispersion liquid contains a solvent, and the polymer compound and the cellulose nanofiber dispersed in the solvent, and can further contain the above-described one or more other components as necessary. Here, "disperse" means "dissolve" and/or "suspend."

As the solvent, a solvent in which the polymer compound can be dissolved and the cellulose nanofiber can be dispersed can be appropriately used, and specific examples include water and dimethylsulfoxide (DMSO). In the step of preparing the dispersion liquid, to uniformly disperse each component in the water, stirring is performed as necessary.

While an amount of the solvent is not specifically limited insofar as a soluble component in the solvent can be dissolved and an insoluble component can be uniformly suspended, for example, the amount of the solvent can be an amount that provides the concentration of the sulfuric acid-esterified CNF of 0.3 mass% or less in the dispersion liquid.

An adding order of the respective components to the solvent to prepare the dispersion liquid is not specifically limited.

When water is used as the solvent, in the step of preparing the dispersion liquid, the polymer compound is preferably dispersed in water at temperature of 80°C or higher. The temperature of the water is preferably a temperature at which the polymer compound can be dissolved, more preferably 90°C or higher, and more preferably 100°C or lower. After the polymer compound is dispersed in water at 80°C or higher, the water temperature may be decreased to a temperature lower than 80°C, for example, room temperature. Addition timings of the cellulose nanofiber and the one or more other components added as necessary to the dispersion liquid are not specifically limited. In one preferable aspect of the step of preparing the dispersion liquid, the cellulose nanofiber and the polymer compound are added to water at 80°C or higher and dispersed, thereby preparing the dispersion liquid. In another preferable aspect of the step of preparing the dispersion liquid, the polymer compound is dispersed in water at 80°C or higher to obtain a polymer compound dispersion liquid, then, the temperature of the polymer compound dispersion liquid is decreased to a temperature lower than 80°C, and subsequently, the cellulose nanofiber is dispersed in the polymer compound dispersion liquid, thereby preparing the dispersion liquid.

When a solvent, such as DMSO, in which each component can be sufficiently dispersed at room temperature, is used as the solvent, the adding order of the respective components to the solvent can be more freely set.

In the method according to this aspect, the step of removing the solvent from the dispersion liquid to obtain the composite (drying step) is a step of removing the solvent from the dispersion liquid by a drying process, for example, air drying, freeze drying, hot-air drying, vacuum drying, spray drying and the like. The drying step can be appropriately selected depending on the desired shape of the water-disintegrable composite. For example, by performing spray drying on the dispersion liquid, a powdery water-disintegrable composite can be obtained.

In a preferable embodiment of the method according to this aspect, to produce the water-disintegrable composite in the shape of the film, the drying step includes a step of removing the solvent from a layer of the dispersion liquid to obtain the composite in the shape of the film.

In this embodiment, the layer of the dispersion liquid can be formed by spreading the dispersion liquid on a bottom of an appropriate container, and a thickness of the layer can be appropriately set considering the concentrations of the components in the dispersion liquid, the desired thickness of the water-disintegrable composite in the shape of the film, and the like. The solvent can be removed from the layer by the drying process, such as air drying, freeze drying, hot-air drying, vacuum drying and the like.

In another preferable embodiment of the method according to this aspect, to produce the water-disintegrable composite in the shape of the film, the drying step includes a step of mixing the dispersion liquid and a coagulation liquid to produce a mixed liquid and forming a coagulum containing the polymer compound and the cellulose nanofiber in the mixed liquid, and a step of removing the solvent from a layer of the coagulum to obtain the composite in the shape of the film.

While the coagulation liquid is not specifically limited insofar as the coagulum containing the polymer compound and the cellulose nanofiber can be deposited in the mixed liquid mixed with the dispersion liquid, examples of the coagulation liquid can include acetone, alcohol (methanol, ethanol, isopropyl alcohol, and the like), a sodium sulfate (Na₂SO₄) aqueous solution, an ammonium sulfate ((NH₄)₂SO₄) aqueous solution, a zinc sulfate (ZnSO₄) aqueous solution, a magnesium sulfate (MgSO₄) aqueous solution, and an aluminum sulfate (Al₂(SO₄)₃) aqueous solution. The coagulants described in this paragraph can be used also in a wet spinning method described later.

The layer of the coagulum can be obtained by forming the coagulum on a bottom of an appropriate container. A thickness of the layer can be appropriately set considering the concentrations of the components in the dispersion liquid, the desired thickness of the water-disintegrable composite in the shape of the film, and the like. The solvent can be removed from the layer by the drying process, such as air drying, freeze drying, hot-air drying, vacuum drying and the like.

In still another preferable embodiment of the method according to this aspect, to produce the water-disintegrable composite in the shape of the fiber, the drying step includes a step of discharging the dispersion liquid from a nozzle to form a fibrous discharged object (fiberizing step), and a step of removing the solvent from the discharged object to obtain the composite in the shape of the fiber (fiber drying step).

The fiberizing step and the fiber drying step may be simultaneously performed, and may be sequentially performed.

An example of a method for simultaneously performing the fiberizing step and the fiber drying step is a dry spinning method. In the dry spinning method, the composite in the shape of the fiber is obtained by discharging the dispersion liquid from a nozzle into an atmosphere at a temperature at which the solvent volatilizes to form a fibrous discharged object, and simultaneously, volatilizing and removing the solvent from the discharged object.

An example of a method for sequentially performing the fiberizing step and the fiber drying step is a wet spinning method. In the wet spinning method, as the fiberizing step, the dispersion liquid is discharged into a coagulation liquid from a nozzle to form the fibrous discharged object (coagulum) containing the polymer compound and the cellulose nanofiber in the coagulation liquid. As the coagulation liquid, the coagulation liquids described relating to the other preferable embodiment are usable. In the wet spinning method, the fiber drying step of removing the solvent from the fibrous discharged object obtained in the fiberizing step is further performed. The solvent can be removed from the fibrous discharged object by the drying process, such as air drying, freeze drying, hot-air drying, vacuum drying and the like.

### [Examples]

### <Method for Producing Sulfuric Acid-Esterified CNF (Cellulose Nanofiber)>

150 g of dimethylsulfoxide (DMSO), 25 g of acetic anhydride (concentration in fibrillation solution: 14 mass%), and 3.35 g of sulfuric acid (concentration in fibrillation solution: 1.87 mass%) were put in a sample bottle of 300 ml, and stirred at room temperature of 25°C for about 30 seconds using a magnetic stirrer, thus preparing a fibrillation solution.

Next, 5.0 g of conifer kraft pulp NBKP (manufactured by Nippon Paper Industries Co., Ltd.) was added to the fibrillation solution, which was further stirred at room temperature of 25°C for 30 minutes to two hours, thus causing a sulfuric acid esterification reaction. After the stirring, 250 ml of distilled water was added to the fibrillation solution containing cellulose to stop the reaction, and subsequently, 5 mass% of a sodium hydroxide aqueous solution was added until pH became 7, thus neutralizing the reaction solution. Then, supernatant was removed by centrifugation.

Further, 1350 ml of distilled water was added and stirred until being uniformly dispersed, and then, supernatant was removed by centrifugation. The same procedure was repeated to perform cleaning three times in total. After the cleaning by centrifugation, distilled water was added, which was diluted until the total weight reached 500 g.

Next, a mixer (G5200, manufactured by Biolomix) was used for stirring for 3 minutes, thus obtaining a uniform aqueous dispersion liquid of cellulose nanofiber with a sulfate ester group (sulfuric acid-esterified CNF) having a concentration of 1 mass%.

### <Quantitative Determination of Introduction Amount of Sulfate Ester Group>

With a combustion and absorption-IC method, a sulfur content ratio due to the sulfuric acid-esterified CNF was determined. That is, dried sulfuric acid-esterified CNF (0.01 g) was put in a magnetic board, which was burnt under an oxygen atmosphere (flow rate: 1.5 L/minute) in a ring furnace (1350°C), and a generated gas component was absorbed in 3% of hydrogen peroxide solution (20 ml). The obtained absorption liquid was diluted with pure water to 100 ml, and a sulfate ion concentration (mass%) was measured by ion chromatography of the dilute solution, thus calculating a sulfur introduction amount (mmol/g) due to the sulfate ester group per gram of the sulfuric acid-esterified CNF based on the measurement result.

By measuring with this method, the introduction amount of the sulfate ester group of the sulfuric acid-esterified CNF prepared as described above was 1.7 mmol/g.

### <Polyvinyl Alcohol (PVA)>

As the PVA, a PVA having a molecular weight of about 65000 manufactured by FUJIFILM Wako Pure Chemical was used.

### <Producing Composite Material of PVA and Sulfuric Acid-Esterified CNF (Cellulose Nanofiber)>

### PVA:sulfuric acid-esterified CNF = 9:1

4.05 g of PVA and 850.95 g of water were added to 45 g of the aqueous dispersion liquid of sulfuric acid-esterified CNF having a concentration of 1%. Then, the PVA was water-solubilized by heating to 80°C and stirring, thus obtaining a mixed aqueous solution of the PVA and the sulfuric acid-esterified CNF.

### PVA:sulfuric acid-esterified CNF = 5:5

0.45 g of PVA and 134.55 g of water were added to 45 g of the aqueous dispersion liquid of sulfuric acid-esterified CNF having a concentration of 1%. Then, the PVA was water-solubilized by heating to 80°C and stirring, thus obtaining a mixed aqueous solution of the PVA and the sulfuric acid-esterified CNF.

### PVA:sulfuric acid-esterified CNF = 1:9

0.05 g of PVA and 54.95 g of water were added to 45 g of the aqueous dispersion liquid of sulfuric acid-esterified CNF having a concentration of 1%. Then, the PVA was water-solubilized by heating to 80°C and stirring, thus obtaining a mixed aqueous solution of the PVA and the sulfuric acid-esterified CNF.

100 g of the mixed aqueous solution was poured into a plastic container of 10 × 20 cm, and dried at 50°C for 10 hours using an air dryer, and then, dried at 105°C for one hour using the air dryer, thus producing a composite of the sulfuric acid-esterified CNF and the PVA in a shape of a film (film-shaped) having a thickness of 20 µm.

From a nozzle of a syringe in which 100 g of the mixed aqueous solution was loaded, the mixed aqueous solution was slowly discharged in 500 ml of acetone (coagulation liquid), thus obtaining a fibrous discharged object of the mixture of the sulfuric acid-esterified CNF and the PVA. The discharged object was taken out of acetone, dried at 50°C for 10 hours using an air dryer, and then, dried at 105°C for one hour using the air dryer, thus producing a composite of the sulfuric acid-esterified CNF and the PVA in a shape of a fiber (fibrous).

### <Producing Comparative Sample>

### (PVA (100%))

99.5 g of water was added to 0.5 g of the PVA. Then, the PVA was water-solubilized by heating to 80°C and stirring, thus obtaining an aqueous solution of the PVA.

100 g of the aqueous solution was poured into a plastic container of 10 × 20 cm, and dried at 50°C for 10 hours using an air dryer, and then, dried at 105°C for one hour using the air dryer, thus producing a PVA in a shape of a film having a thickness of 20 µm.

From a nozzle of a syringe in which 100 g of the aqueous solution was loaded, the aqueous solution was slowly discharged in 500 ml of acetone (coagulation liquid), thus obtaining a fibrous discharged object of the PVA. The discharged object was taken out of acetone, dried at 50°C for 10 hours using an air dryer, and then, dried at 105°C for one hour using the air dryer, thus producing a PVA in a shape of a fiber.

### (PVA (90%), Low Molecular Weight PVA (10%))

4.05 g of the PVA and 0.45 g of a low molecular weight PVA (molecular weight of about 20000) were added to 895.5 g of water. Then, the PVA and the low molecular weight PVA were water-solubilized by heating to 80°C and stirring, thus obtaining a mixed aqueous solution of the PVA and the low molecular weight PVA.

100 g of the aqueous solution was poured into a plastic container of 10 × 20 cm, and dried at 50°C for 10 hours using an air dryer, and then, dried at 105°C for one hour using the air dryer, thus producing a composite of the PVA and the low molecular weight PVA in a shape of a film having a thickness of 20 µm.

From a nozzle of a syringe in which 100 g of the PVA aqueous solution was loaded, the mixed aqueous solution was slowly discharged in 500 ml of acetone (coagulation liquid), thus obtaining a fibrous discharged object of the PVA. The discharged object was taken out of acetone, dried at 50°C for 10 hours using an air dryer, and then, dried at 105°C for one hour using the air dryer, thus producing a PVA in a shape of a fiber.

### (PVA (90%), CMC (10%))

4.05 g of the PVA and 0.45 g of CMC were added to 895.5 g of water. Then, the PVA and the CMC were water-solubilized by heating to 80°C and stirring, thus obtaining a mixed aqueous solution of the PVA and the CMC.

100 g of the aqueous solution was poured into a plastic container of 10 × 20 cm, and dried at 50°C for 10 hours using an air dryer, and then, dried at 105°C for one hour using the air dryer, thus producing a composite of the PVA and the CMC in a shape of a film having a thickness of 20 µm.

### (PVA (90%), Xanthan Gum (10%))

4.05 g of the PVA and 0.45 g of xanthan gum were added to 895.5 g of water. Then, the PVA and the xanthan gum were water-solubilized by heating to 80°C and stirring, thus obtaining a mixed aqueous solution of the PVA and the xanthan gum.

100 g of the aqueous solution was poured into a plastic container of 10 × 20 cm, and dried at 50°C for 10 hours using an air dryer, and then, dried at 105°C for one hour using the air dryer, thus producing a composite of the PVA and the xanthan gum in a shape of a film having a thickness of 20 µm.

### (PVA (90%), Mechanically Processed CNF (10%))

As a mechanically processed CNF, BiNFi-s, WFo-10002 manufactured by Sugino Machine Limited was used.

4.05 g of PVA and 850.95 g of water were added to 45 g of a aqueous dispersion liquid of the mechanically processed CNF having a concentration of 1%. Then, the PVA was water-solubilized by heating to 80°C and stirring, thus obtaining a mixed aqueous solution of the PVA and the mechanically processed CNF.

100 g of the aqueous solution was poured into a plastic container of 10 × 20 cm, and dried at 50°C for 10 hours using an air dryer, and then, dried at 105°C for one hour using the air dryer, thus producing a composite of the PVA and the mechanically processed CNF in a shape of a film having a thickness of 20 µm.

### (PVA (90%), TEMPO-Oxidized CNF (10%))

0.13 mmol of 2,2,6,6-tetramethylpiperidine-N-oxyl (TEMPO) and 10 mmol of sodium bromide were dissolved in water, thus obtaining 250 mL of an aqueous solution. 5 g of the absolutely dried conifer kraft pulp NBKP (manufactured by Nippon Paper Industries Co., Ltd.) was added to the aqueous solution, which was stirred until the pulp was uniformly dispersed. After the temperature of the mixture was made at 20°C, 32 mmol of a sodium hypochlorite aqueous solution (manufactured by FUJIFILM Wako Pure Chemical Corporation) was added to start an oxidation reaction. During the reaction, the temperature of the reaction system was maintained at 20°C, and the pH was maintained at 10 by sequentially adding a 3N sodium hydroxide aqueous solution. After the reaction for three hours, the resultant was filtered with a glass filter, the residue was sufficiently water washed, and water was added to obtain the total weight of 500 g. Subsequently, stirring was performed for three minutes using a mixer (G5200, manufactured by Biolomix), thus obtaining a uniform aqueous dispersion liquid of TEMPO-oxidized CNF having a concentration of 1 mass%.

4.05 g of PVA and 850.95 g of water were added to 45 g of the aqueous dispersion liquid of TEMPO-oxidized CNF having a concentration of 1%. Then, the PVA was water-solubilized by heating to 80°C and stirring, thus obtaining a mixed aqueous solution of the PVA and the TEMPO-oxidized CNF.

### <Evaluation Test 1 (Table 2)>

The water disintegrability, the stringiness, the viscous properties, and the reinforcement property of the composite of the PVA (90%) and the sulfuric acid-esterified CNF (10%) in the shape of the film and the comparative samples in the shape of the film, prepared as described above were evaluated. Table 2 indicates the results.

The water disintegrability was evaluated using the following procedure. 0.1 g of the sample was added to 100 g of water at 25°C in a beaker and left to stand, and whether or not the sample was disintegrated when the sample was grasped with tweezers (the sample was not able to be grasped with tweezers due to a part of the sample separated) after the elapse of a predetermined time was determined. A standing time at which the sample was disintegrated at first was determined as a "water disintegration time." The sample having the water disintegration time of one hour or less was evaluated as "A1," the sample having the water disintegration time of more than one hour and two hours or less was evaluated as "A2," the sample having the water disintegration time of more than two hours and 24 hours or less was evaluated as "A3," and the sample not disintegrated within 24 hours was evaluated as "Y."

The stringiness was evaluated using the following procedure. 0.1 g of the sample was added to 100 g of water at 25°C in a beaker, and stirred for six hours using a magnetic stirrer. When a tip of a glass rod was dipped into the dispersion liquid after the stirring and then taken out, the stringiness was evaluated as "Yes" with pulled strings, and the stringiness was evaluated as "No" without pulled strings.

The viscous properties were evaluated using the following procedure. The samples having the weights indicated in Table 1 below were added to 100 g of water at 25°C in beakers, and stirred for six hours using a magnetic stirrer. 100 g of the uniform dispersion liquids after the stirring were defoamed for 10 seconds using a defoaming device (THINKY MIXER (AWATORIRENTARO) ARE-310, manufactured by THINKY CORPORATION), and left to stand at 25°C for 24 hours. The viscosities of the dispersion liquids after being left to stand were measured at 25°C at rotor rotation speeds of 2.6 rpm and 26 rpm using a B-type viscometer (DV-II+, manufactured by Brookfield). A rotor No. 62 was used for the measurement. The viscosity after 10 minutes from the start of the viscosity measurement was recorded N = 3 times, and the average value was determined as the viscosity of the dispersion liquid. A multiplying factor of the viscosity measured at the rotor rotation speed of 2.6 rpm to the viscosity measured at the rotor rotation speed of 26 rpm was determined as a TI (thixotropic index) value (based on Japanese Industrial Standard (JIS) K 6833-1:2008).

**[Table 1]**

| Composition (All samples are film-shaped) | Sample Weight for Viscous Property Measurement |
|---|---|
| PVA (100%) | 0.3 g |
| PVA (90%) | 3 g |
| Low Molecular Weight PVA (10%) | |
| PVA (90%) | 3 g |
| CMC (10%) | |
| PVA (90%) | 3 g |
| Xanthan Gum (10%) | |
| PVA (90%) | 3 g |
| Mechanically Processed CNF (10%) | |
| PVA (90%) | 3 g |
| TEMPO-Oxidized CNF (10%) | |
| PVA (90%) | 3 g |
| Sulfuric Acid-Esterified CNF (10%) | |

The reinforcement property was evaluated using the following procedure. Tensile tests (the films for the evaluation tests 1 and 2 were based on JIS K 7176-1, and the fibers for the evaluation test 2 were based on JIS R 7606:2000) were performed to obtain elastic moduli and strengths of the respective samples. The reinforcement property of the sample having the elastic modulus and the strength exceeding the elastic modulus and the strength of the sample of PVA 100% having the same shape was evaluated as "Good," and the reinforcement property of the other sample was evaluated as "Poor."

**[Table 2]**

| Composition (All samples are film-shaped) | Water Disintegration Time | Stringiness | Viscosity (mPa-s) 2.6 rpm | Viscosity (mPa-s) 26 rpm | TI Value | Reinforcement Property |
|---|---|---|---|---|---|---|
| PVA (100%) | Y | No | 1 | 1 | 1 | - |
| PVA (90%) | A2 | Yes | 2600 | 500 | 5.2 | Poor |
| Low Molecular Weight PVA (10%) | | | | | | |
| PVA (90%) | A1 | Yes | 1800 | 300 | 6 | Poor |
| CMC (10%) | | | | | | |
| PVA (90%) | A2 | Yes | 4800 | 500 | 9.6 | Poor |
| Xanthan Gum (10%) | | | | | | |
| PVA (90%) | Y | No | 1 | 1 | 1 | Good |
| Mechanically Processed CNF (10%) | | | | | | |
| PVA (90%) | Y | No | 1 | 1 | 1 | Good |
| TEMPO-Oxidized CNF (10%) | | | | | | |
| PVA (90%) | A3 | No | 5300 | 500 | 10.6 | Good |
| Sulfuric Acid-Esterified CN F (10%) | | | | | | |

### <Evaluation Test 2 (Table 4)>

The water disintegrability, the stringiness, the viscous properties, and the reinforcement property of the samples in the shape of film and the samples in the shape of the fiber of the composites comprising PVA and sulfuric acid-esterified CNF having different mass ratios prepared as described above were evaluated. The evaluation method is as described in "Evaluation Test 1 (Table 2)." Table 3 indicates the weights of the samples used in the measurement of the viscous properties. Table 4 indicates the results.

**[Table 3]**

| PVA: Sulfuric Add-Esterified CNF | Shape | Sample Weight for Viscous Property Measurement |
|---|---|---|
| 5:5 | Film | 1.5 g |
| 1:9 | Film | 0.33 g |
| 9:1 | Fiber | 3 g |
| 5:5 | Fiber | 1.5 g |
| 1:9 | Fiber | 0.33 g |

**[Table 4]**

| PVA: Sulfuric Acid-Esterified CNF | Shape | Water Disintegration Time | Stringiness | Viscosity (mPa·s) 2.6 rpm | Viscosity (mPa·s) 26 rpm | TI Value | Reinforcement Property |
|---|---|---|---|---|---|---|---|
| 5:5 | Film | A2 | No | 5400 | 900 | 6 | Good |
| 1:9 | Film | A1 | No | 6000 | 800 | 7.5 | Good |
| 9:1 | Fiber | A3 | No | 5600 | 1000 | 5.6 | Good |
| 5:5 | Fiber | A2 | No | 6200 | 900 | 6.9 | Good |
| 1:9 | Fiber | A1 | No | 6100 | 1000 | 6.1 | Good |

All the publications, patents, and patent applications cited in this description are directly incorporated herein as references.

## Claims

1. A solid water-disintegrable composite comprising:
a polymer compound poorly soluble or insoluble in water at 25°C and soluble in water at 80°C or higher; and
a cellulose nanofiber with a sulfate ester group.

2. The composite according to claim 1,
wherein the polymer compound is one or more selected from the group consisting of polyvinyl alcohol, starch, gelatin, carrageenan, agar, and a derivative thereof.

3. The composite according to claim 2,
wherein the polymer compound is a polyvinyl alcohol having a weight average molecular weight of 60,000 g/mol or more and 220,000 g/mol or less.

4. The composite according to any one of claims 1 to 3,
wherein the cellulose nanofiber is contained by 2 mass% or more and 98 mass% or less relative to a total amount of the polymer compound and the cellulose nanofiber.

5. The composite according to any one of claims 1 to 4,
wherein the composite has a shape of a film or a fiber.

6. The composite according to any one of claims 1 to 5,
wherein a shape is disintegrated in water at 25°C within 24 hours.

7. The composite according to any one of claims 1 to 6,
wherein an aqueous dispersion liquid prepared by dispersing the composite in water so as to have a concentration of the cellulose nanofiber of 0.3 mass% does not have stringiness at 25°C.

8. The composite according to any one of claims 1 to 7,
wherein an aqueous dispersion liquid prepared by dispersing the composite in water so as to have a concentration of the cellulose nanofiber of 0.3 mass% has a viscosity of 500 mPa•S or more when the viscosity is measured at 25°C under a condition of a rotor rotation speed of 2.6 rpm using a B-type viscometer.

9. The composite according to any one of claims 1 to 8,
wherein an aqueous dispersion liquid prepared by dispersing the composite in water so as to have a concentration of the cellulose nanofiber of 0.3 mass% has a thixotropic index (TI) value is from 3 to 30 when the thixotropic index (TI) value is obtained from a viscosity measured at 25°C under a condition of a rotor rotation speed of 2.6 rpm using a B-type viscometer and a viscosity measured at 25°C under a condition of the rotor rotation speed of 26 rpm using the B-type viscometer of the aqueous dispersion liquid.

10. A method for producing the composite according to any one of claims 1 to 9, comprising:
a step of preparing a dispersion liquid containing a solvent, and the polymer compound and the cellulose nanofiber dispersed in the solvent; and
a step of removing the solvent from the dispersion liquid to obtain the composite.

11. The method according to claim 10,
wherein the step of removing the solvent from the dispersion liquid to obtain the composite includes a step of removing the solvent from a layer of the dispersion liquid to obtain the composite in a shape of a film.

12. The method according to claim 10,
wherein the step of removing the solvent from the dispersion liquid to obtain the composite includes:
a step of mixing the dispersion liquid and a coagulation liquid to produce a mixed liquid and forming a coagulum containing the polymer compound and the cellulose nanofiber in the mixed liquid; and
a step of removing the solvent from a layer of the coagulum to obtain the composite in a shape of a film.

13. The method according to claim 10,
wherein the step of removing the solvent from the dispersion liquid to obtain the composite includes:
a step of discharging the dispersion liquid from a nozzle to form a fibrous discharged object; and
a step of removing the solvent from the discharged object to obtain the composite in a shape of a fiber.
